Europäisches Patentamt

European Patent Office

Office européen des brevets

(11) Veröffentlichungsnummer: **0 233 335**

**A2**

(12) # EUROPÄISCHE PATENTANMELDUNG

(21) Anmeldenummer: **86116600.7**

(22) Anmeldetag: **28.11.86**

(51) Int. Cl.4: **A01L 3/00** , **A01L 5/00**

(30) Priorität: **21.02.86 CH 703/86**
**21.02.86 CH 705/86**

(43) Veröffentlichungstag der Anmeldung:
**26.08.87 Patentblatt 87/35**

(84) Benannte Vertragsstaaten:
**AT BE CH DE ES FR GB GR IT LI LU NL SE**

(71) Anmelder: **Mustang SA**
**2, rue Victor Tissot**
**1630 Bulle(CH)**

(72) Erfinder: **Clarin, Mustad**
**Cerisier 7**
**CH-2300 La Chaux-de-Fonds(CH)**
Erfinder: **Stübbe, Peter**
**Forsthaus**
**D-2061 Bliestorf(DE)**
Erfinder: **Kreis, Peter**
**Spiegelbergstrasse 17**
**CH-6318 Walchwil(CH)**
Erfinder: **Schaper, Max Ulrich**
**Im Tobel 9**
**CH-8706 Feldmellen(CH)**

(74) Vertreter: **Blum, Rudolf Emil Ernst et al**
**c/o E. Blum & Co Patentanwälte Vorderberg**
**11**
**CH-8044 Zürich(CH)**

(54) **Pferdehufschuh.**

(57) Der Schuh besitzt Laschen (4), welche zum Verkleben mit der Hufaussenseite bestimmt sind. Eine Sohle (3) bildet eine Standfläche (34) für den Huf und liegt auf Metalltrittelementen (7) auf. Diese Trittelemente (7) sind einstückig mit einem umlaufenden Metallprofil (6) verbunden, welches seinerseits mit einem Laschenband 10 vergossen ist. Die Laschen (4) sind schräggestellt und liegen deshalb ohne äusseren Druck von selbst an der Hufwand an, womit eine einwandfreie Verklebung ermöglicht wird. Durch diese einwandfreie Verklebung ergibt sich ein äusserst präziser Sitz des Hufschuhs am Pferdehuf. Ein z.B. V-förmig geschwungener Quersteg (5) bewirkt durch seine elastische Biegefähigkeit entlang dem eingezeichneten Doppelpfeil, dass die Hufeigenbewegungen nicht gestört werden. Der dargestellte Pferdehufschuh kann auch als Vollkunststoffhufschuh ausgebildet sein und ist zur anatomischen Korrektur des individuellen Hufs geeignet.

Fig. 1a

## Pferdehufschuh

Die Erfindung betrifft einen Pferdehufschuh mit Laschen zum Verkleben an der Hufaussenseite, mit einer Standfläche für die Hufunterseite und einer Laufffläche auf der Unterseite des Schuhs, wobei eine die Standfläche bildende und dem Umriss des Hufs entsprechende Sohle vorgesehen ist.

Pferdehufschuhe, welche mit Hilfe von Laschen mit dem Huf zu verkleben sind, sind seit längerer Zeit bekannt. Verschiedenste Schuhe solcher Art sind bis heute offenbart worden; kein solcher Schuh hat sich jedoch bis heute auf dem Markt durchsetzen können. Der Grund liegt darin, dass kein Pferdebesitzer das Risiko eingehen will, einen nicht vollständig ausgereiften und zuverlässigen Pferdehufschuh zu verwenden. Bestehen nur geringe Zweifel an der 100 %igen Tauglichkeit des Pferdehufschuhs der oben genannten Art, wird das konventionelle Hufeisen nicht zuletzt darum vorgezogen, weil auch seine Mängel bestens bekannt sind und sich der Pferdebesitzer entsprechend vorsehen kann.

In jüngster Zeit sind vor allem zwei Vorschläge bekanntgeworden, wie ein Pferdehufschuh mit Laschen zum Verkleben an der Hufaussenseite ausgeführt werden könnte. Der erste Vorschlag ist in der DE-PS 28 15 374 offenbart; vorgesehen ist ein Vollsohlenkörper, welcher mit einem hufeisenförmigen Profileisen vergossen ist, wobei an letzterem ein Gummiteil mit Laschen zum Verkleben mit der Hufaussenseite angebracht ist.

Dieser Schuh bietet jedoch unter anderem die folgenden Hauptnachteile:

Zur Herstellung des Vollsohlenkörpers muss von der Unterseite des Hufs ein Negativabdruck hergestellt werden; aus diesem Negativabdruck kann dann der Hersteller des Schuhs (und nicht der Hufschmied) den Vollsohlenkörper herstellen. Damit ist nicht nur die Schuhherstellung als solche unwirtschaftlich und damit für den Markt nicht geeignet; der Beschlag des Pferdes muss auch für Abnahme des Negativabdrucks entfernt werden und dann, bis der gefertigte Hufschuh mit Vollsohlenkörper zur Verfügung steht, wieder am Huf angebracht werden.

Weiter wurden die Eigenbewegungen des Hufs unterschätzt. Der Verbund Vollsohlenkörper-Profileisen erlaubt, trotz einer gewissen Elastizität, nicht in jedem Fall genügend Eigenbewegung der Hufteile.

Zudem wird die Hufunterseite vollständig abgedichtet. Dies ist nur in Ausnahmefällen, z.B. bei Verletzungen, wünschenswert.

Weiter ist, wie auch in der oben genannten Patentschrift angegeben, der Schuh am Huf äusserst fest verankert. Dies erscheint als Vorteil; es wird jedoch kein Pferdehalter das Risiko auf sich nehmen, dass beim Hinterhaken während einer aufwärtsgerichteten Hufbewegung der Schuh samt gewissen Teilen der Hornwand vom Pferdefuss abgerissen wird. Der Huf selbst kann dabei zerstört werden.

Diese und andere Nachteile haben dazu geführt, dass eine weitere Ausführungsform eines Pferdehufschuhs mit Laschen zum Verkleben mit dem Huf entwickelt wurde. Diese Weiterentwicklung ist in der Europäischen Patentanmeldung mit Veröffentlichungsnummer 0 181 522, veröffentlicht am 21. Mai 1986, offenbart worden. Der beschriebene Schuh besitzt eine plattenförmige Sohle aus Kunststoff, welche in einem am Umfang des Schuhs umlaufenden Metall profil eingepasst ist. Das Metallprofil besitzt an der Hufwand aufsteigende Aufzüge, welche die zu verklebenden Laschen tragen. Weiter besitzt das Metallprofil unter die Sohle reichende Trittelemente; die Sohle ist mit von den Trittelementen nach oben abstehenden Halterungsmitteln formschlüssig mit dem Metallprofil verbunden. Die Sohle besitzt zudem in der Art des bekannten Hufeisens an ihrem hinteren Ende einen Querriegel, welcher zur Sicherung der notwendigen Steifheit des Schuhs einen Kreisschluss des umlaufenden Metallprofils bewirkt.

Versuche haben gezeigt, dass trotz der an sich überzeugenden Konzeption die folgenden Nachteile nicht ausgemerzt werden konnten: Der Schuh wird am Huf angebracht, indem die die Laschen tragenden Metallaufzüge vom Hufschmied durch Hämmern an die Hufwand angelegt werden. Damit kann einerseits die Hufwand beschädigt werden, andererseits entstehen Probleme bei der Beschlagung von sensiblen Hufen, deren Lösung speziell durch alternative, klebbare Beschläge der vorliegenden Art angestrebt wird.

Es ist deshalb Aufgabe der vorliegenden Erfindung, die oben beschriebenen Probleme zu überwinden, also insbesondere einen klebbaren Hufschuh so auszugestalten, dass keinerlei Hammerschläge bei der Montage an den Huf nötig sind. Bei Verzicht auf Metallaufzüge in den Klebelaschen gemäss EU-Patentanmeldung Nr. 181 522 stellen sich folgende Probleme: Auf welche Weise ist eine einwandfreie Verklebung der Laschen mit dem Huf zu erreichen, wenn diese nicht durch die angehämmerten Metallaufzüge der jeweiligen Hufform bleibend angepasst werden können? Wie lässt sich die notwendige Festigkeit des Hufschuhs, insbesondere gegen Scherkräfte, ohne Metallaufzüge der erwähnten Art noch gewährleisten?

Diese Probleme werden überraschenderweise durch die Massnahmen gemäss Patentanspruch 1 gelöst.

Zur Ueberraschung der Fachwelt ist es also möglich, auf die Metallaufzüge zu verzichten und trotzdem eine einwandfreie oder gar noch bessere Verklebung der Laschen zu gewährleisten. Zudem konnte überraschenderweise gezeigt werden, dass durch genaues Umfassen des Hufs mit einwandfrei klebenden Laschen eine allseitige Festigkeit derart gegeben ist, dass auch ohne den durch die Metallaufzüge gebildeten, versteifenden Käfig die allgemeine Verwindung des Schuhs in zulässigen Grenzen gehalten werden kann. Auch konnte gezeigt werden, dass trotz des fehlenden Metallkäfigs die Krafteinleitung vom Huf in den Schuh überzeugend gleichmässig verteilt erfolgt. Im Gegenteil ist bei gewissen sehr hohen Beanspruchungen durch die elastisch federnde Dämpfung der Kunststofflaschen eine Flexibilität gegeben, welche, im Gegensatz zum Schuh mit den Metallaufzügen, eine lokale Ueberbeanspruchung nicht entstehen lässt.

Das Konzept ohne Metallaufzüge mit - schrägstehenden Laschen erlaubt nun die nachstehend angeführten Ausführungsformen, welche in Kombination oder einzeln realisiert die bekannten Nachteile von Pferdehufschuhen überwinden und damit dem Pferdehalter einen klaren Entscheid bezüglich des Einsatzes des erfindungsgemässen Pferdehufschuhs, wie früher beim Hufeisen, ermöglichen.

Bei einem bevorzugten Ausführungsbeispiel sind in der Regel 10-20 Laschen beim ganzen Pferdehufschuh vorgesehen. Erfindungsgemäss sind die Laschen zur Hufaussenseite hin geneigt. Der Neigungswinkel aus der Vertikalen, welcher für ein Anliegen der Lasche an der Hufaussenseite nötig ist, ändert sich entlang des Hufschuhumfangs von etwa 0° im hinteren Teil der Seitenwand des Hufs bis etwa 50° im Vorderteil des Hufs. Weiter weisen die Laschen am Uebergang vom Randprofil in die Lasche vorzugsweise eine Nut auf. Diese Nut erlaubt das einfache Anpassen der Neigung der Laschen an den tatsächlichen Winkel der Hufaussenwand. Die Laschen können somit justiert werden; - schon eine erste Festigkeit der Verklebung bewirkt, dass die Lasche einwandfrei an der Hufaussenseite anliegt, auch wenn die Schrägstellung der Lasche nicht vollständig mit der Neigung der Hufaussenwand übereinstimmt. Diese Nut erlaubt also das einfache Anpassen der Laschen an den tatsächlichen Winkel der Hufaussenwand.

Ferner bildet die Nut eine Solltrennstelle zwischen den Laschen und dem übrigen Hufschuh. Damit kann erreicht werden, dass beim Hängenbleiben des Hufschuhs an einem Hindernis ein Abreissen desselben vom Huf erfolgt, bei dem keine Kräfte auftreten, welche den Huf gefährden.

Weiter weisen die Klebelaschen entweder eine Klebefläche mit einer vorgegebenen Wölbung oder eine wölbbare Lasche auf. Diese Wölbung wird bei der ersten Ausführung so gewählt, dass sie der Krümmung der Hufaussenseite möglichst gut entspricht. Demgemäss weisen die Laschen an der Vorderseite des Hufs die grösste Wölbung auf. Diese Wölbung erlaubt eine noch bessere Klebebefestigung, da die Klebefläche der Lasche genauer der Hufaussenseite entspricht. Bei der zweiten Ausführung wird die richtige Wölbung durch Anschmiegung der Lasche an die Hufwölbung bei der Klebung direkt erzielt, wobei dann die Lasche eine entsprechende längsverlaufende Schwächung besitzen muss.

Vorzugsweise beträgt der Winkel zwischen der Vertikalen und den einzelnen Laschen zwischen 0° an den Seiten und 50° in der Mitte, währenddem von Lasche zu Lasche eine Differenz von etwa 5° gegeben ist.

Bei einem Hufschuh der oben beschriebenen Art sind häufig die Kunststofflaschen mit einem am Schuhumfang umlaufenden Metallprofilband vergossen. Von diesem Profilband ausgehende Metalltrittelemente untergreifen die Sohle und bilden die Lauffläche des Schuhs. Damit der Schuh seine Funktion erfüllen kann, muss eine gewisse Griffigkeit gegenüber dem Boden bestehen. Probleme stellen sich nun mit Metalltrittflächen insofern, dass auf nassem Gras oder Asphalt eine nur sehr - schlechte Griffigkeit besteht.

Es ist deshalb vorgeschlagen worden, auf den Trittelementen längliche Erhebungen durch Aufschweissen anzubringen. Diese halten jedoch dem Verschleiss während der Benutzung des Schuhs nicht stand. Weiter wurde vorgeschlagen, in die Unterseite des Schuhs Stifte einzusetzen, welche, ähnlich den Spikes in den Autopneus, mit ihren Köpfen aus den Trittelementen hervorragen und erhöhte Griffigkeit bewirken. Diese Lösung bewirkt jedoch eine so hohe Griffigkeit, dass ein leichtes Schleifen des Schuhs auf Asphalt nicht mehr möglich ist: Der Gang des Pferdes verändert sich, man spricht vom Stumpfgehen. Solch eine Eigenschaft des Schuhs wird von den Pferdehaltern nicht akzeptiert.

Eine weitere Aufgabe der vorliegenden Erfindung besteht deshalb darin, einen Hufschuh zu - schaffen, welcher eine geeignete Griffigkeit auf dem Untergrund aufweist, so dass ein Hufschuh, dessen Tauglichkeit durch die schrägstehenden Laschen grundsätzlich gegeben ist, auch wirklich eingesetzt werden kann.

Entsprechend ist solch ein Hufschuh dadurch gekennzeichnet, dass die Metalltrittelemente mit einer Oeffnung versehene, nach unten vorstehende Buckel aufweisen. Diese mit einer Oeffnung versehenen Buckel sind ein ausgezeichneter Kompromiss zwischen dem zuwenig griffigen Plattentrittelement und dem eine zu hohe Griffigkeit aufweisenden Trittelement mit eingesetztem Stift. Weiter weisen die Buckel einen zusätzlichen, sehr wesentlichen Vorteil auf: Die Stelle des Hauptabriebs bzw. der eine Deformation des Schuhs bewirkenden Kraftangriffspunkte ist geometrisch bestimmt. Das vordere untere Ende des umlaufenden Metallprofils bleibt vom Verschleiss zunächst verschont; d.h. der kritische Ort, wo grosse Deformationskräfte wirken, bleibt unversehrt und in seiner Festigkeit erhalten. Es sei daher hervorgehoben, dass die Ausrüstung des Schuhs mit Buckeln an seinen Trittelementen eine Konstruktion mit schrägstehenden Laschen ohne versteifende Metallaufzüge unterstützt und deren Lebensdauer erhöht.

Bei einem bevorzugten Ausführungsbeispiel sind die Gebiete der Buckel durch eine aufgeschweisste Hartmetallschicht, insbesondere Wolframkarbid, vor Verschleiss zusätzlich geschützt. Da wegen der Buckel die Hartmetallschicht nur an bestimmten Orten aufgetragen werden muss, kann der restliche Schuh während der Schweissarbeiten z.B. in Wasser getaucht verbleiben, so dass der am Metallprofil angegossene Kunststoff nicht durch Wärme belastet wird.

Ein weiterer Vorteil des Buckels besteht darin, dass eine rationelle Fertigung des Laschenprofils ermöglicht ist. Da zur Herstellung des Buckels, nebst dem Einprägen, keine weiteren Arbeitsgänge notwendig sind und das Metallprofil durch die Prägung im gesamten unverändert bleibt, können die Kunststoffteile durch Spritzgiessen am Profil angebracht werden.

Sollte der Schuh in extremen Verhältnissen, wie z.B. auf Eis oder Schnee eingesetzt werden, können in die Oeffnungen der Buckel Stifte eingesetzt werden. Diese Stifte wirken dann wie die konventionellen Stollen an den Hufeisen. Ebenfalls ist es von Vorteil, wenn Springreiter, welche ihr Pferd in bereits etwas aufgewühltem Gelände bewegen, solche Stifte vorsehen. Es ist aber nicht notwendig, jede Buckelöffnung mit einem Stift zu versehen. Dies kann je nach Einsatzzweck gesondert überlegt werden. Entsprechend können auch von den Buckelöffnungen wieder lösbare Stifte vorgesehen werden.

Der vorstehend beschriebene Schuh weist viele Vorteile auf. Entsprechend ist es wünschenswert, ihn auch für den Einsatz bei gewissen Sportarten oder für Fohlen vorzusehen. Bis heute is jedoch kein Alternativbeschlag zum Hufeisen und Nagel bekannt geworden, welche für solchen Einsatz überzeugt. Dabei ist insbesondere das Gewichtsproblem noch ungelöst gewesen.

Es ist deshalb ein weiterer Aspekt der vorliegenden Erfindung, einen Pferdehufschuh zu - schaffen, welcher für gewisse Sportarten und insbesondere auch für Fohlen geeignet ist. Dieser Schuh zeichnet sich dadurch aus, dass die Lauffläche aus aus Kunststoff bestehenden Trittelementen gebildet ist, welche mittels einem am Schuhumfang umlaufenden Kunststoffprofil mit den Laschen einstückig verbunden sind.

An sich bietet solch ein Schuh gewisse Nachteile. Die Verbindungsstabilität ist nicht sehr hoch, er unterliegt schnellem Abrieb. Weiter ist seine Griffigkeit im Gras recht klein, während sie auf Asphalt sehr hoch ist. Da solch ein Schuh jedoch sehr leicht ist, bietet er diese Nachteile überwiegende Vorteile für z.B. Traber, welche auf einer Sandbahn laufen oder bei einer Anwendung bei Fohlen.

Speziell wird ein Hufschuh der vorgenannten Art wie folgt eingesetzt: Fohlen, im allgemeinen auf einer Weide gehalten, werden in der Regel nicht beschlagen. Da ihre Hufe jedoch noch sehr weich sind, muss unter allen Umständen vermieden werden, dass sie auf hartem Untergrund, wie z.B. Asphalt, laufen. Geschieht dies doch, kann ein Fohlenhuf solch einem starken Verschleiss ausgesetzt sein, dass der Huf für immer verdorben ist. Der Besitzer eines wertvollen Pferdes wird also alles daran setzen, dass dies nicht vorkommt. Versuche haben nun gezeigt, dass ein Vollkunststoffschuh insbesondere für Anwendung bei Fohlen den auftretenden Beanspruchungen überraschenderweise vollständig genügt. Durch das einfache Ersetzen des Metallprofils durch ein Kunststoffprofil konnte entgegen allen Erwartungen ein Spezialbeschlag insbesondere für Fohlen oder Traber geschaffen werden, welcher den Ansprüchen genügt.

Insbesondere bewährt sich ein Vollkunststoffschuh dann, wenn er mit schrägstehenden Laschen ausgerüstet ist. Der dann möglich gewordene präzise stramme Sitz am Huf unterstützt durch eine gleichmässige und stark ausgebildete Verklebung solch eine Versteifung des gesamten Schuhs, dass er auch härteren Beanspruchungen gewachsen ist.

Da natürlich die Kunststofftrittelemente eine gewisse Dicke besitzen müssen, wird vorzugsweise eine dünne Sohle vorgesehen, da sonst der Gang des Pferdes nachteilig beeinflusst werden kann.

Wie bereits angedeutet ist auch die Sohle ein wesentlicher Bestandteil des Hufschuhs. Sie ist massgebend für dessen Steifigkeit. In der Regel besitzt die Sohle Hufeisenform und ist mit einem Quersteg ausgerüstet. Solch eine Ausbildung liegt insofern auf der Hand als dass die Hufunterseite offengehalten ist und zudem eine gewisse Verformbarkeit gegeben ist. Bei einem Hufschuh, bei welchem durch die schrägen Laschen ein sehr sauberer Sitz erreichbar ist,wird jedoch die Verformbarkeit zu einem sehr wichtigen Kriterium. Kann sich nämlich der Huf beim Auftreten nicht in genügendem Mass, d.h. annähernd so weit, wie es ohne Beschlag der Fall ist, verformen, können die anderen Qualitäten dieses Schuhs wegen mangelnder Langzeittauglichkeit nicht im gewünschten Mass zum Tragen kommen. Eine hufeisenförmige Sohle mit starrem Quersteg hat grundsätzlich einen zu starren Schuh zur Folge: Die beiden Länggseiten des Schuhs können sich nur ungenügend auseinanderbewegen.

Dies gilt in besonderem Mass für eine geschlossene Sohle. Für gewisse Verhältnisse wäre solch eine geschlossene Sohle wünschenswert: Bei Verletzungen der Hufunterseite sollte ein Schutz gegen mechanische Beanspruchung von unten bestehen; dies gilt ebenso beim Laufen auf Kies oder im Schnee wegen der Schneestollenbildung.

Entsprechend besteht eine weitere Aufgabe der vorliegenden Erfindung darin, eine geschlossene Sohle zu schaffen, welche mindestens die Elastizität einer offenen Sohle aufweist.

Eine Sohle entsprechend dieser Aufgabe ist dadurch gekennzeichnet, dass sie eine geschlossene Fläche bildet, wobei der mittlere Teil der Sohlenfläche eine grössere Elastizität aufweist als der Randbereich. Eine bevorzugte Ausführungsform ist dadurch gekennzeichnet, dass die Sohle einstückig ausgebildet ist und der mittlere Teil eine Ausnehmung aufweist; wahlweise kann die Ausnehmung an der hufseitigen Innenfläche der Sohle vorgesehen sein. Besonders günstig ist es, wenn die Ausnehmung im wesentlichen keilförmig ausgebildet ist und die Sohle aus Polyurethan bzw. technischem Polyurethan besteht. In diesem Falle beträgt die Sohlendicke 9-14 mm und die Restdicke im Bereich der Ausnehmung 2-6 mm.

Denselben Zweck erfüllt aber auch eine Sohle, welche mehrstückig ausgebildet ist. Eine bevorzugte Ausführungsform ist dadurch gekennzeichnet, dass ein erster Sohlenteil im wesentlichen hufeisenförmig ausgebildet ist und an der inneren Seitenwand eine Führung aufweist, in welche ein zweiter Sohlenteil von der Hinterseite des Hufs her einschiebbar ist, welche die Sohlenfläche schliesst. Der zwischen Sohle und Hufunterseite bestehende Hohlraum kann dann mit einer dauerelastischen Material, z.B. Silikon mit medizinischen Zusätzen, ausgefüllt werden. Als medizinische Zusätze können auch handelsübliche Materialien verwendet werden, welche antiseptische Wirkung haben. Von Bedeutung ist, dass die Füllung im Hohlraum zwischen Huf und Sohle luftdurchlässig ist.

Durch eine Sohle, welche oben beschriebene Merkmale aufweist, sind die notwendigen Eigenbewegungen ermöglicht, obschon die ganze Sohlenfläche geschlossen ist. Die erwähnte keilförmige Ausnehmung bewirkt, dass die Sohlendicke an dieser Stelle verringert wird, was die erhöhte Elastizität zur Folge hat. Im Falle der mehrteiligen Sohle kann der eine, den Randbereich bildende Sohlenteil im wesentlichen hufeisenförmig ausgebildet sein und der zweite, mehr Elastizität aufweisende Sohlenteil in eine Führung des ersten Sohlenteiles einschiebbar sein. Die Verbindung der beiden Sohlenteile erfolgt dann vorzugsweise genau gleich wie in dem Fall, in welchem eine einstückige, hufeinsenförmige und mit einer Oeffnung versehene Sohle vorliegt. Verschiedene Verbindungsmöglichkeiten sind weiter unten aufgeführt.

Im allgemeinen soll der Randbereich der geschlossenen Sohle etwa die gleiche Elastizität und Festigkeit wie bei bekannten offenen Sohlen aufweisen, doch kann eventuell die Elastizität etwas grösser und die Festigkeit etwas geringer sein, da bei der erfindungsgemässen geschlossenen Sohle das Mittelteil hinzukommt, welches die geschlossene Sohlenfläche ermöglicht und dabei, trotz der erhöhten Elastizität, eine gewisse Festigkeitserhöhung der Sohle bewirkt. Im Fall der Sohle mit einer keilförmigen Ausnehmung wird letztere so gewählt, dass die Elastizität der Sohle, insbesondere bei seitlichen Belastungen, etwa derjenigen einer offenen Sohle entspricht, was z.B. durch eine einfache Messung festgestellt werden kann. Solch eine Ausnehmung hat ferner den Vorteil, dass für den Strahl des Pferdehufschuhs genügend Raum vorhanden ist. Weiter ist dem Fachmann sofort klar, dass durch bestimmte Wahl der Grösse der Ausnehmung eine Elastizität bewirkt werden kann, welche die gewöhnlich gewünschte unter-oder übersteigt.

Wird die Sohle bestimmungsgemäss an einem Pferdehufschuh verwendet, so wird vorzugsweise der Hohlraum zwischen Sohle und Huf mit einem dauerelastischen Material, wie z.B. Silikonmasse, ausgefüllt, um das Eindringen von Gegenständen, Schmutz oder Schnee in den Hohlraum von der Hinterseite des Hufs her zu vermeiden.

Eine geschlossene Sohle kann aber auch bei gewissen Hufen grundsätzlich gewünscht sein: Der Huf steht mit einem an seinem Umfang verlaufenden Hornrand auf der Sohle auf; das Hufinnere ist dabei, vom Hornrand auf ansteigend; nach oben gewölbt. Dies bedeutet, dass der äussere Sohlenrand stark belastet ist, der innere Sohlenrand kann sich dadurch etwas emporwölben. Ist nun aus irgend einem Grund die Wölbung des Hufinnern nur sehr schwach ausgeprägt oder aber der Hornrand, mit welchem der Huf aufsteht, nur schwach ausgeprägt, kann der nach oben gedrückte innere Sohlenrand gegen das Hufinnere angedrückt werden. Obschon die Gefahr solch einer unerwünschten Sohlenverformung beim präzisen Sitz des erfindungsgemässen Hufschuhs aufgrund seiner - schräggestellten Laschen nicht sehr gross ist, wird man da und dort gerne zu einem Hufschuh greifen, bei welchem aufgrund der geschlossenen Sohlenfläche die Gefahr einer zu starken Emporwölbung eines Sohlenteils nicht gegeben ist.

Eine weitere Aufgabe der vorliegenden Erfindung besteht darin, auch bei einer hufeisenförmigen, also eine Oeffnung aufweisenden Sohle sicherzustellen, dass die Hufeigenbewegungen ungehindert stattfinden können. Wird jedoch der den Kreisschlus der Sohle bewirkende Quersteg weggelassen, verliert der Hufschuh zu sehr an Festigkeit.

Erfindungsgemäss werden deshalb die beiden hinteren Enden der Sohle durch einen Steg verbunden, welcher höchstens teilweise der kürzesten Verbindungslinie zwischen den Verbindungsstellen des Stegs mit der Sohle entlang verläuft. Bei einer bevorzugten Ausführungsform ist der Steg zwischen den Verbindungsstellen V-oder W-förmig geschwungen ausgebildet. Dies erlaubt, dass die Hufeigenbewegungen stattfinden, da der Quersteg nicht nur auf Zug sondern auch auf Biegung beansprucht wird. Bei einem V-förmig ausgebildeten Steg wird sich das V, sich auseinanderbiegend, aufspreizen, wodurch für die beiden Enden des Schuhs genügend Bewegungsweg zur Verfügung steht. Derselbe Vorgang findet beim W-förmig geschwungenen Steg statt; es liegt dabei auf der Hand, dass je nach Ausbildung des Stegs, also z.B. V-oder W-förmig, eine verschieden grosse Elastizität der Sohle in bezug auf Hufeigenbewegungen ermöglicht wird. Das bedeutet, dass je nach Wahl der Stegform der Hufschuh individuell anpassbar ist.

Speziell im Fall des Kunststoffschuhs, erfolgt die Verbindung zwischen den Kunststofftrittelementen und der Sohle vorzugsweise mit metallischen Verbindungselementen. Wesentlich ist dabei, dass sich solche Verbindungselemente nicht von der Lauffläche bis zur Standfläche des Schuhs erstrecken, da sonst das Pferd direkt auf diesen Elementen stehen würde. Entsprechend kann vorgesehen werden, z.B. nietartig ausgebildete Verbindungselemente in die Trittelemente einzugiessen, beim Zusammenbau des Schuhs die Sohle mit entsprechenden Löchern auszustatten und nach Auflegen der Sohle auf das umlaufende Kunststoffprofil mit den Trittelementen, die durch die Löcher ragenden Teile der Verbindungselemente nietartig aufzuweiten. Eine andere Möglichkeit besteht darin, die Verbindungselemente in Ausnehmungen der Trittelemente versenkt anzuordnen.

Nachdem der erfindungsgemässe Schuh aufgrund seiner schrägstehenden Laschen einen präzisen Sitz am Huf erlaubt und auch die wenn nötig individuell anpassbare Elastizität für Hufeigenbewegungen gegeben ist, sind alle Voraussetzungen gegeben, dass solch ein Schuh für anatomische Korrekturen eines nicht dem Durchschnitt entsprechenden Hufs verwendet wird.

Es kommt häufig vor, dass die Hufstellung aufgrund einer Sehnenverkürzung im Bein des Pferdes Fehler aufweist. Der Huf liegt dann zu flach oder zu steil auf dem Boden auf; im Fall des zu steilen Hufs spricht man vom Bockhuf. Abhilfe kann dann geschaffen werden, wenn eine anatomisch korrigierende Sohle verwendet wird. Erfindungsgemäss ist solch eine korrigierende Sohle im Längsschnitt keilförmig ausgebildet; das Dicke Ende der Sohle kann dann vorne oder hinten liegen. Weiter ist es möglich, Teile der Standfläche der Sohle nach unten abzusetzen, so dass eine Stufensohle entsteht und die entsprechenden Teile des Hufs nicht auf der Sohle aufstehen. Diese Anordnung sei Stufensohle genannt. Sie empfiehlt sich dann, wenn Teile des Hufs Verletzungen aufweisen und deshalb nicht beansprucht werden solen.

Es sei besonders darauf hingewiesen, dass die Keilsohle zur Korrektur des Bockhufs vor allem bei Fohlen zur Anwendung gelangt. Bei Fohlen ist nämlich die Sehnenverkürzung in der Regel noch korrigier-und damit heilbar. Bei älteren Pferden ist dies in der Regel nicht mehr der Fall, so dass es bei der reinen Symptomkorrektur bleiben muss. Voraussetzung für die anatomische Korrektur des Bockhufs bei Fohlen ist der erfindungsgemässe Vollkunststoffschuh, welcher, ausgerüstet mit einer Keilsohle, eine bevorzugte Ausführungsform für Spezialanwendungen bildet.

Aufgrund der hervorstechenden Eigenschaften des erfindungsgemässen Hufschuhs, nämlich äusserst präziser und genauer Sitz am Huf und richtige Elastizität für Hufeigenbewegungen, kann auch eine andere Art der anatomischen Korrektur verwirklicht werden. Wird am vorderen Ende des Schuhs eine Nase angebracht, so kann das Pferd, wenn es sein Bein vorzieht, den Huf nicht mehr um seine vordere Kante nach vorne abrollen; diese Abrollachse ist aus dem Huf bzw. aus dem Hufschuh nach vorne in den Bereich der Nasenspitze verlegt. Dies bedeutet, dass die Beugesehne, welche in den Huf hineinverläuft, kurz vor Abheben des Hufs vermehrt gestreckt wird. Damit die Nase individuell angepasst werden kann, ist ihre Oberfläche mit Markierungslinien zur geeigneten Kürzung versehen. Bei leichten Sehnenverkürzungen empfiehlt es sich nämlich, die Länge der Nase z.B. durch den Hufschmied herabzusetzen, um eine Ueberkorrektur zu vermeiden.

Der Unterschied zwischen den oben beschriebenen anatomischen Korrekturen besteht darin, dass durch die Keilsohle eine statische Korrektur gegeben ist, da eine Sehnenkorrektur im Stand stattfindet; mit Hilfe einer vorn am Schuh angebrachten Nase folgt eine dynamische Korrektur, weil die Beugesehne in einer bestimmten Phase des Laufens immer wieder gestreckt wird.

Zusammenfassend kann festgehalten werden, dass die Aufgabe der Erfindung darin besteht, einen Pferdehufschuh zu schaffen, welcher allen Aspekten des realen Einsatzes genügt und daher auch tatsächlich verwendbar ist. Insbesondere muss dabei gewährleistet sein, dass der Hufschuh trotz präzisem und festen Sitz in Extremfällen vom Huf abreissbar ist, ohne dass der Huf beschädigt oder gar zerstört wird. Weiter muss sichergestellt sein, dass für Hufeigenbewegungen, welche von der Belastung des Hufs abhängig sind, genügend Elastizität gegeben ist, ohne dass diese Elastizität den festen und präzisen Sitz des Schuhs beeinträchtigt. Zudem ist es erforderlich, dass der Schuh für verschiedene Geländearten und unter verschiedenen, zum Teil extremen Bedingungen wie etwa Eis und Schnee oder nur Sand gerecht wird. Weiter soll er auch dann verwendbar sein, wenn ein Huf von der durchschnittlichen Ausbildung abweicht. Insbesondere muss auch daran gedacht werden, dass für Fohlen, z.B. im Falle des Bockhufs, ein Beschlag notwendig werden kann.

Die Lösung dieser Aufgaben besteht darin, dass der Hufschuh mit schrägstehenden Laschen ausgerüstet ist und dass die bisher unumgänglichen Metallaufzüge, welche den unteren Bereich der Lasche überdecken, entfallen. Damit kann der Schuh einwandfrei und ohne Hämmern am Huf befestigt werden.

Im Fall der offenen Sohle wird ein geschwungener Quersteg eingesetzt, welcher, da bei Hufeigenbewegungen auch auf elastische Biegung beansprucht, mehr Elastizität bewirkt, als ein gerader, nur auf Zug beanspruchter Quersteg. Im Falle der geschlossenen Sohle wird die vermehrte und notwendige Elastizität durch Bereiche mit vergrösserter Elastizität erreicht.

Weicht ein Huf von der Norm ab, so kann eine anatomische Korrektur durch Keil-oder Stufensohle oder wahlweise durch Anordnen einer Nase vor dem Schuh erreicht werden.

Für Fohlen oder für Traber wird vorzugsweise ein Vollkunststoffschuh vorgesehen, bei solch einem Schuh muss allerdings der Verbindung zwischen den Kunststofftrittelementen und der Sohle besondere Aufmerksamkeit geschenkt werden, um die notwendige Festigkeit des Schuhs zu erhalten. Dies wird durch die beschriebenen Verbindungselemente erreicht.

Hervorgehoben werden soll, dass die reale Einsetzbarkeit des Hufschuhs unter verschiedensten Bedingungen vor allem dadurch gegeben ist, dass seine verschiedenen Elemente, wie z.B. umlaufendes Profilband, Sohle und Quersteg erfindungsgemäss modifiziert werden. Dieser modulare Aufbau ist es, welcher bewirkt, dass ein Schuh derart zusammengesetzt werden kann, dass er allen Anforderungen genügt. Die Kumulierbarkeit der einzelnen Merkmale bewirkt, dass sie sich gegenseitig für bestimmte Anwendungen unterstützen und in jedem Fall die bisher bestehenden Verwindungs- bzw. Festigkeitsprobleme des Schuhs überwunden sind.

Wesentlich an der Erfindung ist, dass einzelne Merkmale, soweit sie sich nicht ausschliessen, beliebig kombiniert werden können; darum existiert auch nicht ein einziges, bevorzugtes Ausführungsbeispiel (best mode).

Nachstehend werden mit Hilfe der Zeichnungen bevorzugte Ausführungsformen des erfindungsgemässen Hufschuhs schematisch dargestellt. Es zeigt:

Figur 1a eine Ansicht des Hufschuhs schräg von oben, wobei an seinem Umfang ein unlaufendes Metallprofil vorgesehen ist,

Figur 1b den Hufschuh schräg von oben, wobei es sich hier um einen Vollkunststoffschuh handelt;

Figur 1c eine Ansicht des Hufschuhs von Figur 1a von unten, wobei zusätzlich eine Nase vorgesehen ist;

Figur 1d einen Querschnitt durch den Schuh von Figur 1a entlang der in dieser Figur eingezeichneten Linie I-I;

Figur 2a ein Stück eines Randprofils eines Pferdehufschuhs mit zwei Laschen;

Figur 2b eine Schnittansicht einer Lasche mit Wölbung;

Figur 2c eine Schnittansicht einer Lasche mit einer Schwächungsstelle,

Figur 3 eine Teilschnittansicht eines Pferdehufschuhs;

Figur 4 eine einteilige Sohle;

Figur 5 eine mehrteilige Sohle;

Figur 6 eine einteilige Sohle, welche als Keilsohle ausgebildet ist, wobei Ausnehmungen angedeutet sind, so dass sie zugleich als Stufensohle verwendet werden kann;

Figur 7 eine mehrteilige Sohle, welche als Keilsohle ausgebildet ist;

Figur 8a eine Ansicht von unten des Hufschuhs von Figur 1b, wobei der Quersteg leicht modifiziert ist;

Figur 8b, 8c, 8d jeweils einen Querschnitt entlang der Linie II-II von Figur 1b, mit unterschiedlich ausgestalteten Verbindungselementen zwischen den Trittelementen und der Sohle des Schuhs.

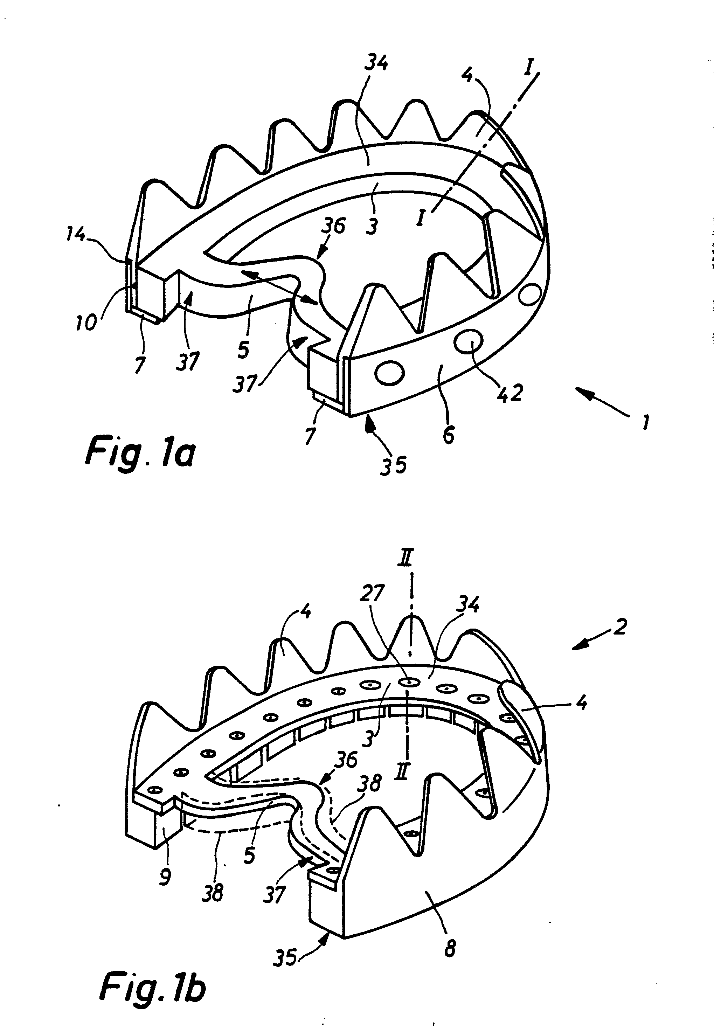

In Figur 1a ist ein generell mit 1 bezeichneter, erfindungsgemässer Pferdehufschuh dargestellt. Er besitzt schräggestellte Laschen 4, welche, einstückig an einem Laschenband 10 angeformt, mit einem unlaufenden Metallprofil 6 vergossen sind. Vom Metallprofil 6 abstehende und abgewinkelte Metalltrittelemente 7 bilden die Lauffläche 35 des Schuhs. Das Profil umfasst eine Sohle 3 mit einer als Standfläche 34 für den Huf ausgebildeten oberen Seite. Weiter ist ein Quersteg 5 vorhanden, welcher V-förmig geschwungen ist und an seinen Enden einstückig in die Sohle übergeht. Je nach Belastungsdruck spreizt sich der Huf auf und versucht, die Enden des Schuhs, wie mit dem eingezeichneten Doppelpfeil angedeutet, auseinanderzudrücken. Dabei werden die Enden 37 des Querstegs auf Zug und der mittlere Bereich 36 des Querstegs auf aufspreizende Biegung beansprucht. Es ist nun leicht ersichtlich, dass die wesentliche Verformung des Querstegs im Bereich 36 erfolgt, während die nur auf Zug beanspruchten Enden 37 sich für die meisten Anwendungsfälle nur ungenügend dehnen lassen. Es sei angemerkt, dass richtige Verformung des Querstegs 5 ausserordentlich wichtig ist, da die Hufeigenbewegungen den Huf und seine eingeschlossen Teile sowie die Gliedmassen, insbesondere die Gelenke, vor Schädigungen wie Prellungen und Verstauchungen, die durch den Gegendruck des Bodens bei der Belastung entstehen, bewahren.

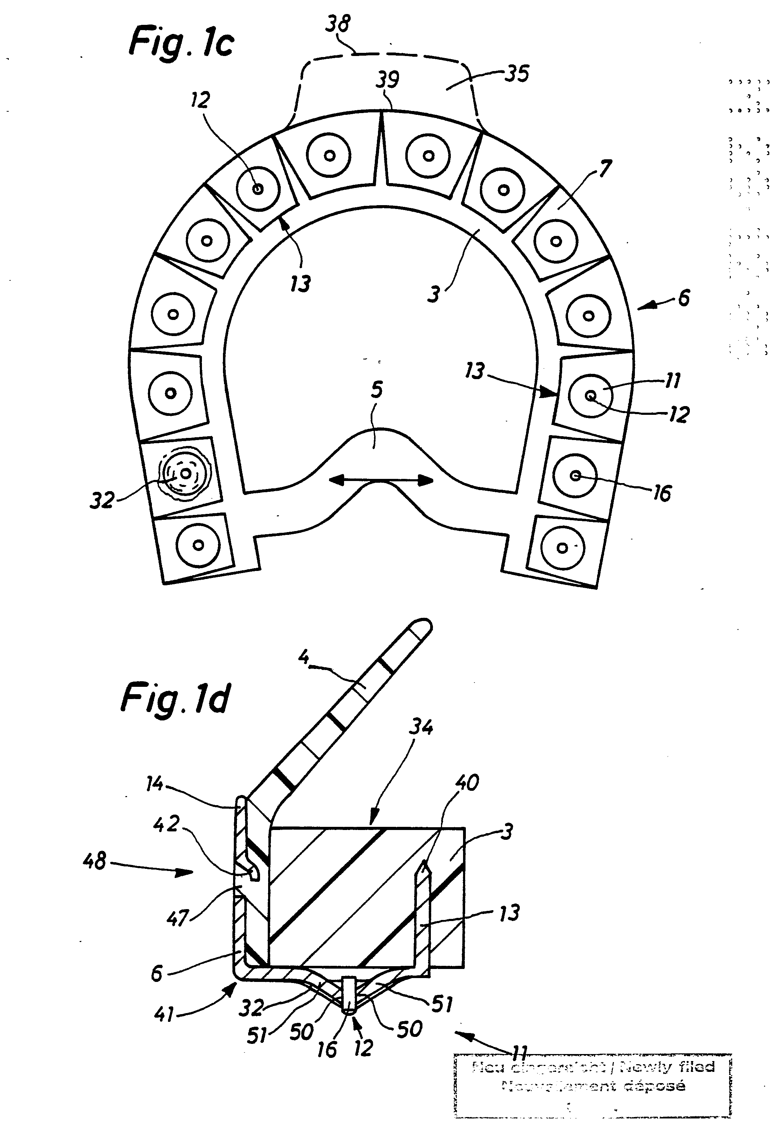

Weiter sind in der Figur Verbindungsstellen 48 für Unterstützung der Verbindung des Profils 6 mit Kunststoff dargestellt. Diese Verbindungsstellen sind kreisförmig ausgebildet und zweigeteilt. Zu deren Herstellung wird wie folgt vorgegangen: Ausstanzen eines halbmondförmigen Stückes aus dem Metallprofil 6 und Eindrücken der restlichen Kreisfläche derart, dass eine aus dem Profil herausragende Nase 42 gebildet wird, welche sich oberhalb der halbmondförmigen Oeffnung 47 befindet. Diese Nase bildet einen Widerhaken 42 (siehe Figur 1d), welcher an seinen seitlichen Rändern in das Profil übergeht.

Damit ist es möglich, wenn eine einzelne, beschädigte oder zerstärte Lasche wie folgt zu ersetzen: Entfernen der beschädigten Lasche samt dem hinter dem Profil 6 am Ort der Lasche sich befindenden Kunststoffmaterial durch z.B. ein spitzes Werkzeug; danach Einsetzen einer neuen Einzellasche, welche natürlich mit einer entsprechenden Verlängerung versehen ist, die an der Nase 42 vorbei hinter dem Profil 6 eingeschoben werden kann. Nebst einem geeigneten Klebstoff wird die Nase 42 einen festen Sitz der neuen Lasche im Schuh 1 bewirken.

Die Verlängerung der Lasche hat vorzugsweise die Form einer die Laschenbreite aufweisenden Zunge. Natürlich muss zwischen dieser Zunge und der Lasche ein Winkel zwischen 0° -50° bestehen, je nachdem, ob eine vordere oder hintere Lasche ersetzt werden soll. Zudem muss diese neue Lasche alle Merkmale aufweisen, welche die alte, auszuwechselnde Lasche besitzt, da sonst kein vollwertigen Ersatz gegeben ist.

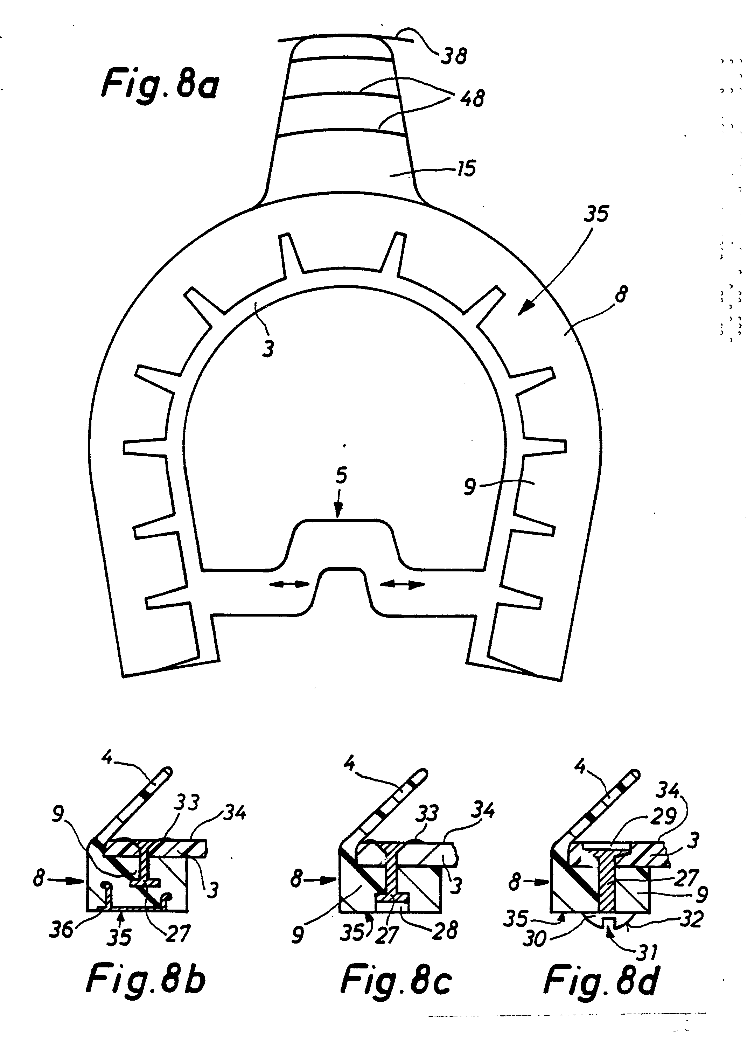

Figur 1b zeigt einen erfindungsgemässen Vollkunststoffschuh 2. Die erfindungsgemäss - schräggestellten Laschen 4 sind einstückig an einem unlaufenden Kunststoff profil 8 angeformt, welches zugleich die unter die Sohle greifenden Kunststofftrittelemente 9 bildet. Die Gesamtheit der unteren Seiten der Trittelemente 9 bilden die Lauffläche 35. Die oberen Seiten der Trittelemente 9 bilden die Auflage für eine in das Umlaufende Kunststoffprofil einzulegende Sohle 3. Wie bereits in Figur 1a dargestellt, besitzt die Sohle 3 einen den Kreisschluss bewirkenden Quersteg 5. Es ist auch denkbar, dass der Quersteg 5 nicht als der Teil der Sohle ausgebildet ist, sondern, wie durch die gestrichelten Linien angedeutet, gegenüberliegende Trittelemente miteinander verbindet. In diesem Fall würde dann der Kreisschluss im Kunststoffprofil 8 hergestellt. Solch eine Ausführungsform kann jedoch nur in wenigen Fällen verwendet werden, da dann der Schuh in einer Standardgrösse vorgegeben wäre. Normalerweise wird jedoch beim Hufschmied anhand eines Abdrucks des Pferdehufs die Sohle 3 aus einer Kunststoffplatte ausgeschnitten und dann das Profil 6 oder 8 um die Sohle herum gebogen und mit dieser verbunden. Auf der Standfläche der Sohle 3 sind die oberen Enden von Verbindungselementen 27 dargestellt (siehe Figur 8c). Der Vollkunststoffschuh 2 eignet sich wegen seines geringen Gewichts vor allem für Fohlen. Auch ist er für Vollblüter geeignet, welche im Sand oder auf trockener Graspiste laufen; für den Sand ist genügend Griffigkeit durch die Kunststofftrittelemente gegeben. Es ist klar, dass die Verwindungssteifigkeit des Schuhs 2 gegenüber dem Schuh 1 etwas vermindert ist, da kein stützendes Metallprofil 6 vorhanden ist. Es wird jedoch hervorgehoben, dass aufgrund des präzisen und festen Sitzes, wie er mit den schräggestellten Laschen möglich ist, immer noch genügend Festigkeit für diese Spezialanwendungen gegeben ist.

Figur 1c zeigt eine Ansicht des Schuhs 1 von unten. Dargestellt ist die durch die Metalltrittelemente 7 gebildete Standfläche 34. Diese Trittelemente sind mit eingeprägten oder eingestanzten Buckeln 11 versehen, wel che eine Oeffnung 12 aufweisen (siehe auch Figur 1d). Durch diese Buckel wird eine erhöhte Griffigkeit der Metalltrittelemente auf dem Untergrund bewirkt; wie bereits in der Beschreibungseinleitung angedeutet, bildet die dadurch erzeugte Griffigkeit einen sehr guten Kompromiss zwischen dem nur flächig ausgebildeten Metalltrittelement 7, bei welchem rutschen im nassen Gras und auf Asphalt sehr leicht vorkommt und in der Art von Spikes in die Trittelemente 7 eingesetzten Stiften, bei welchen vor allem auf Asphalt ein Stumpfgehen die Folge ist. Dargestellt ist weiter eine auf die Buckeloberfläche aufgebrachte Hartmetallschicht 32, welche einen erhöhten Abriebschutz bewirkt. Versuche haben gezeigt, dass sich Wolframkarbid gut eignet und auch leicht durch Schweissung aufbringen lässt. Wie bereits in der Beschreibungseinleitung angedeutet, können einzelne Oeffnungen 12 mit Stiften 16 versehen werden, damit auch unter extremen Verhältnissen erhöhte Griffigkeit gegeben ist. Der Vorteil der Buckelanordnung besteht darin, dass nicht alle Oeffnungen 12 mit Stiften 16 versehen werden müssen; auch können sie wahlweise eingesetzt und wieder entfernt werden. Weiter ist eine vorn am Schuh vorgesehene Nase 15 gestrichelt dargestellt. Diese Nase 15 dient dazu, das Pferd zu einem Gang zu zwingen, welcher seine Beugesehne streckt. Damit ist eine anatomische Korrektur des Bockhufs ermöglicht. Das Pferd kann nicht mehr um die vordere Kante 39 des Hufschuhs abrollen; die Abrollachse ist aus dem Hufschuh hinaus nach vorne zur Kante 38 versetzt. Dies bedeutet, dass das Bein vor Abheben der Lauffläche noch etwas stärker nach vorn gekippt werden muss, bis der Huf vom Boden abhebt. Dadurch wird die Beugesehne vermehrt gestreckt.

Weiter ist ein Quersteg 5 ersichtlich, welcher bei der Eigenbewegung des Hufs eine Verformung des Schuhs entsprechend dem eingezeichneten Doppelpfeil ermöglicht.

Figur 1d zeigt einen Querschnitt durch den Schuh 1 entlang der in Figur 1a gezeichneten Linie I-I. Es ist dargestellt, wie die Sohle 3 von einem Laschenprofil umfasst wird. Dieses Laschenprofil besteht aus den Laschen 4, welche mit einem unlaufenden Metallprofil 6 vergossen sind. Vom Metallprofil 6 stehen Metalltrittelemente 7 ab. Sie untergreifen die Sohle und besitzen an ihren Enden vom Trittelement nach oben abstehende Verbindungselemente 13 für formschlüssige Verbindung mit der Sohle. Vorzugsweise besitzen die Verbindungselemente 13 selbstschneidende Spitzen 40, so dass die Sohle durch Aufdrücken auf die Spitzen 40 in ihre Endlage gebracht werden kann. Dargestellt ist ein oberer Randbereich 14 des Randprofils 6, welcher sich etwa 2-4 mm insbesondere am vorderen Ende des Schuhs über die Sohle erhebt. Er dient dazu, die Laschenwurzel vor allzugrossem seitlichen Druck des auf der Standfläche 34 aufliegenden Hufs zu schützen. Der obere Randbereich 14 dient nicht dazu, dass die Lasche an den Huf angedrückt wird; sein Zweck besteht einzig darin, in Extremfällen ein seitliches Abscheren der Lasche zu vermeiden. Die Buckel 11 besitzen eine Oeffnung 12, in welche wahlweise Stifte 16 eingesetzt werden können. Solche Stifte sind handelsüblich und haben in der Regel eine Länge von z.B. 6,5 mm. Ein besonderes Problem bestand darin, die Buckelöffnung 12 derart auszugestalten, dass die Stifte zuverlässig gehalten werden. Die vorzugsweise verwendete Dicke der Trittelemente 7 von 2,5 mm erlaubte den anzustrebenden, zuverlässigen Sitz nicht. Dieses Problem wurde wie folgt überwunden: Am Ort der einzuprägenden Buckel 12, genau am Ort der späteren Oeffnung 11 wird im künftigen Profil 6 eine Bohrung angebracht. Diese Bohrung erlaubt ein Einprägen der Buckel, ohne dass die Buckelwandung reisst, und muss einen kleineren Radius als derjenige der Oeffnung 11 besitzen. Nachdem der Prägevorgang des Buckels abgeschlossen ist, wird die durch die Prägung naturgemäss verzerrte Bohrung weiter aufgebohrt. Dies hat nun nicht nur den Vorteil, dass eine saubere Oeffnung 11 gebildet ist; wesentlich ist zudem, dass die Oeffnung 11 bis in die schräg verlaufenden Buckelseitenwände 51 erreicht. Damit ist gegeben, dass die vertikal verlaufenden Wände der Oeffnung 11 die schrägen Buckelseitenwände derart schneiden, dass sie eine Höhe von ca. 3,5 mm besitzen, womit ein sicherer Sitz eines Stiftes 16 erreichbar ist. Der Stift darf nun nicht soweit in den Buckel eingetrieben werden, dass er auf die untere Seite der Sohle 3 stösst, da er sonst eventuell durch den Druck des Hufs gelockert werden könnte. Weiter kann ein wie oben beschrieben fixierter Stift leicht mit Hilfe einer z.B. Zange aus dem buckel wieder entfernt werden.

Die Oberfläche der Buckel wird, wie bereits erwähnt, vorzugsweise mit eine Wolframkarbidschicht bedeckt. Aus der Figur ist leicht ersichtlich, dass die Berührung mit hartem Untergrund entlang der Oeffnungen 12 stattfindet. Damit ist der Ort der höchsten Beanspruchung gegeben. Dies ist darum von Vorteil, weil damit die Kante 41 vor Verschleiss gesichert ist. Eine unversehrte Kante 41 ist für einwandfreie Verwindungssteifigkeit des Hufschuhs wesentlich. Die Buckel dienen also nicht nur dazu, dem Hufschuh die gewünschte Griffigkeit zu verleihen; sie erfüllen auch eine wesentliche Funktion für die Langlebigkeit des Schuhs. Es ist klar, dass anstelle der mit selbstschneidenden Spitzen 40 ausgestatteten Verbindungselemente 13 andere Lösungen gewählt werden können. Wesentlich ist dabei dann, dass sich die Verbindungselemente nicht durch die gesamte Sohle hindurch von der Standfläche 34 bis zur Laufläche 35 erstreckt. Sonst läuft das Pferd auf den Verbindungselementen, der federnde Effekt der Kunststoffsohle ist dahin und der Hufrand lokal übermässig beansprucht. Es wäre z.B. möglich, analog der in Figur 8b gezeigten Lösung, in der Sohle 3 Ausnehmungen vorzusehen, in welchen der Kopf eines Verbindungselements versenkt ist.

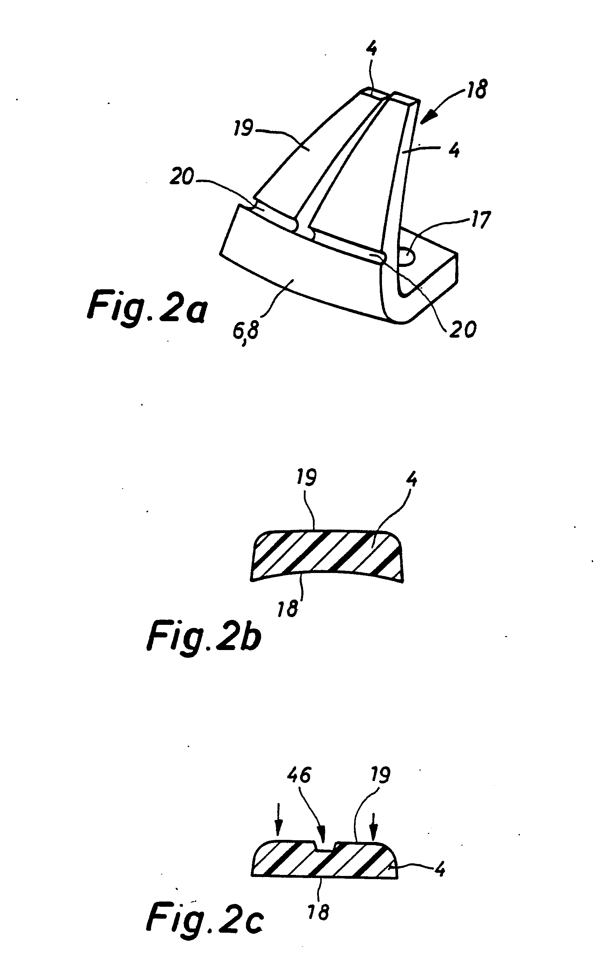

Figur 2a zeigt eine perspektivische Ansicht eines Teils eines Randprofils 6, 8 eines Pferdehufschuhs. Das Profil ist im Querschnitt im wesentlichen L-förmig und besteht vorzugsweise aus Kunststoff, allenfalls mit einem zusätzlichen, umlaufenden Metallprofil. Bei dem gezeigten Randprofil sind die Laschen 4 einstückig angeformt. Bei dem gezeigten Profilstück 6,8 sind zwei Laschen 4 vorhanden; beim ganzen Pferdehufschuh sind in der Regel 10-20 Laschen 4 vorgesehen. Erfindungsgemäss sind die Laschen 4 im gezeigten Beispiel zur Hufaussenseite hin geneigt. Der Neigungswinkel aus der Vertikalen, welcher für ein Anliegen der Lasche auf der Hufaussenseite nötig ist, ändert sich entlang des Hufschuhumfangs von etwa 0° im hinteren Teil der Seitenwand des Hufes bis etwa 50° am Vorderteil des Hufes. Im gezeigten Beispiel weisen die Laschen 4 am Uebergang zum Randprofil 6,8 in die Lasche eine Nut 20 auf. Diese Nut 20 erlaubt das einfache Anpassen der Neigung der Laschen 4 an den tatsächlichen Winkel der Hufaussenwand. Es muss jedoch hervorgehoben werden, dass diese Anpassung eine ausgesprochene Feinanpassung ist. Das bedeutet, dass die Laschen mindestens annähernd eine Neigung abhängig von der durchschnittlichen oder individuellen Neigung des Hufs am Ort der jeweiligen Lasche aufweisen, die zusätzliche Verschwenkung der Laschen zum Zweck der genauen Justierung und Anpassung an den jeweiligen Huf nur einige Winkelgrade umfasst.

Ferner bildet die Nut eine Solltrennstelle zwischen dem Laschen und dem übrigen Hufschuh. Damit kann erreicht werden, dass beim Hängenbleiben des Hufschuhs an einem Hindernis ein Abreissen desselben vom Huf erfolgt, bei dem keine Kräfte auftreten, welche den Huf gefährden. Das Vorsehen solch einer Nut in einem Pferdehufschuh, bei welchem das Hauptziel der Entwicklung genügend Festigkeit und Verwindungssteifigkeit ist, wird vom Fachmann auf Anhieb von der Hand gewiesen. Alle Bestrebungen, wie auch aus dem erwähnten Stand der Technik ersichtlich ist, zielen dahin, den Schuh möglichst sicher und unverrückbar am Huf zu verankern. Mit Hilfe der erfindungsgemäss schräggestellten Laschen, ist es nun überraschenderweise möglich geworden, solch eine Schwächungsnut an der Wurzel der Laschen vorzusehen. Dies ist sehr wichtig, kein Pferdebesitzer wird das zwar ohne Frage äusserst geringe Risiko eingehen wollen, dass er sein Pferd verliert, weil durch Hängenbleiben des Hufschuhs dessen Huf beschädigt oder zerstört wurde.

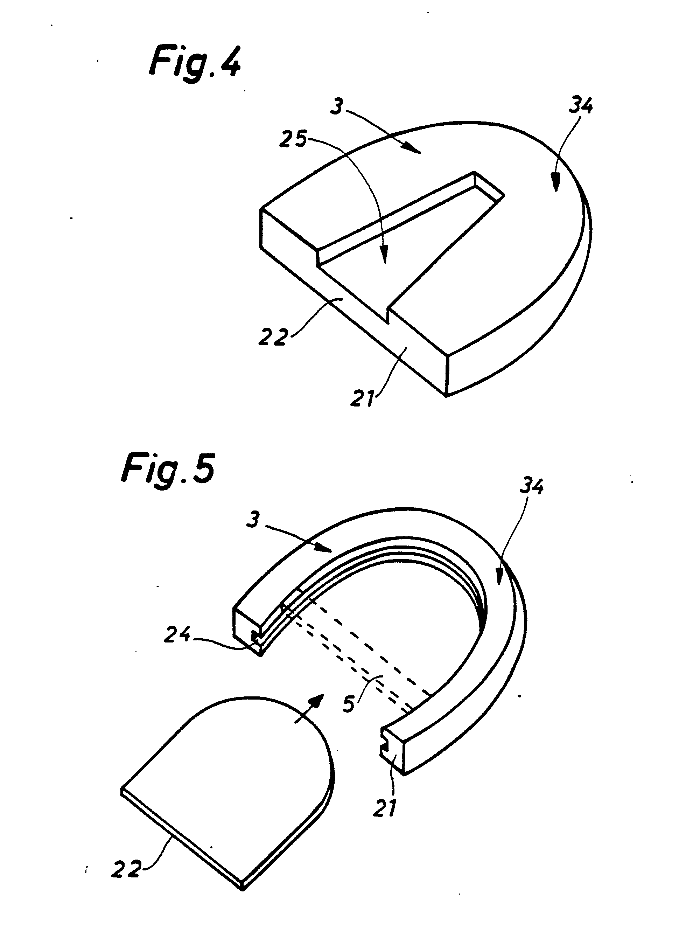

Figur 2b zeigt einen Schnitt durch eine Lasche in einer Ebene parallel zur Sohle des Hufschuhs bzw. parallel zur horizontalen Ebene des L-förmigen Randprofils 6,8. Dabei ist ersichtlich, dass die Klebefläche 18 der Lasche 4 eine Wölbung aufweist. Die Aussenfläche 19 der Lasche ist hingegen gerade gehalten. Auch diese kann jedoch, wenn gewünscht, der Wölbung der Klebefläche folgen. Die Wölbung der Klebefläche 18 wird so gewählt, dass sie der Krümmung der Hufaussenseite möglichst gut entspricht. Demgemäss weisen die Laschen an der Vorderseite des Hufes die grösste Wölbung auf. Diese Wölbung erlaubt eine noch bessere Klebebefestigung, da die Klebefläche der Lasche genauer der Hufaussenseite entspricht. Wie bereits weiter vorne erwähnt, muss die Verklebung hinsichtlich zweier Punkte höchsten Anforderungen genügen. Der erste Punkt besteht darin, dass die Lasche bezüglich ihrer Neigung der Hufaussenwand genau anliegt; dies ist nicht selbstverständlich, wie z.B. Figur 4 der erwähnten europäischen Veröffentlichung 0 181 522 zeigt. Das gewünschte genaue Anliegen wird durch die erfindungsgemäss schrägstehenden Laschen erreicht und erlaubt, dass die noch nicht fertig abgebundene Verklebung einwandfrei aushärten kann. Der zweite Punkt besteht darin, dass die Verklebung nicht nur in der Linie von der Laschenwurzel zur Laschenspitze einwandfrei ausgebildet sein muss, sondern auch über die gesamte Laschenbreite ihre volle Festigkeit bringen muss. Insbesondere dieser Punkt wurde bisher übersehen. Bei einem Pferdehufschuh mit die Laschen überdeckenden Metallaufzügen hämmerte der Hufschmied die Metallaufzüge gegen die Hufaussenwand so gut es eben ging.

Dies bedeutete in der Regel, dass die Lasche nur an einem Ort richtig an der Hufaussenwand anlag, während die Klebefläche der Lasche der Hufaussenwand nur schlecht folgte. Eine mässig gute Verklebung mit entsprechend nicht ganz sauberem bzw. präzisem Sitz des Hufschuhs war die Folge. Eine Korrektur dieses unsauberen Sitzes wurde durch die den Huf allseitig in der Art eines Metallkäfigs umschliessenden Metallaufzüge bewirkt. Ohne diese Metallaufzüge ist entsprechend der Sitz eines solchen Pferdehufschuhs nicht überzeugend. Deshalb ist es erst jetzt möglich, die Metallaufzüge wegzulassen, da die erfindungsgemäss schräggestellten Laschen den bis jetzt nicht gegebenen einwandfreien, strammen Sitz des Pferdehufschuhs am Huf zur Folge haben.

Figur 2c zeigt eine weitere Ausführungsform, bei welcher anstelle einer gewölbten Fläche 18 eine Schwächungsnut 46 an der Aussenfläche 19 der Lasche 4 vorgesehen ist. Diese Nut 46 erlaubt, die an sich gerade Fläche 18 der Hufwölbung durch nur leichten Druck in Richtung der eingezeichneten Pfeile anzupassen. Dabei verläuft die Nut 46 vorzugsweise von dem Fuss der Lasche bis gegen ihre Spitze. Anstelle einer Nut 46 können natürlich auch mehrere, nebeneinander verlaufende Nuten vorgesehen werden.

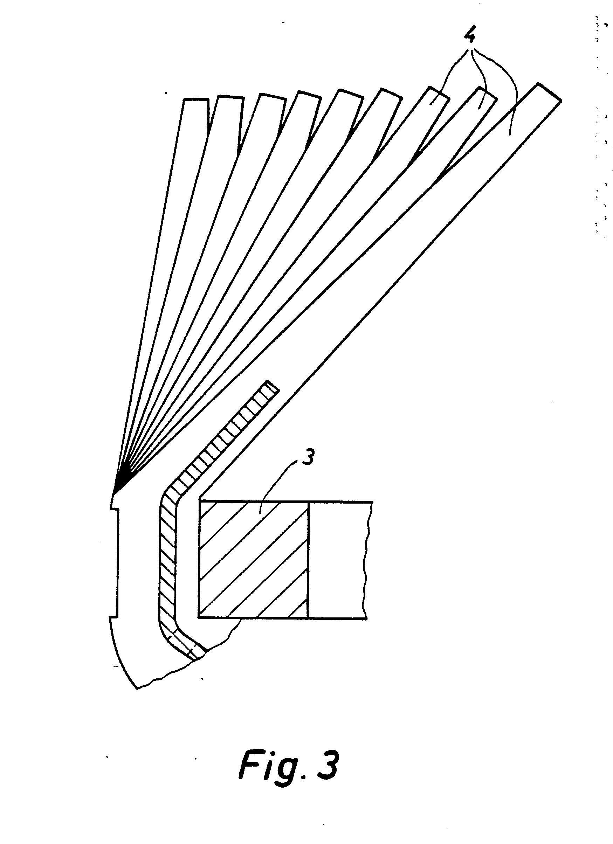

In Figur 3 ist ein Teil eines Randprofils und der Sohle eines Pferdehufschuhs gezeigt. Diese Figur soll nur die unterschiedliche Neigung der Laschen 4 verdeutlichen, ohne dass nähere Aufschlüsse über die restliche Konstruktion des Schuhs zu entnehmen wären. Neun Laschen 4 sind mit ihrer Neigung dargestellt, wobei die vorderste Lasche den grössten Neigungswinkel aufweist. Diese Lasche kommt auf die Vorderseite des Hufs zu liegen, welche den spitzesten Winkel zwischen Lauffläche und Flächenwand des Hufes aufweist. Die weiteren Laschen weisen je einen jeweils geringeren Winkel zur Vertikalen hinauf, wobei der Unterschied von Lasche zu Lasche ca. 5° beträgt. Zur besseren Verdeutlichung der Neigung ist das Randprofil als gerade nach hin ten verlaufend dargestellt, was natürlich nicht der Form des Hufschuhs entspricht, bei welchem das Randprofil der Form des Hufes bzw. der Sohle 3 folgt.

Erfindungsgemäss wird das Randprofil ohne den sich in die Laschen erstreckenden Metalleinsatz ausgeführt sein, d.h. die Lasche besteht ausschliesslich aus Kunststoff.

Die Figuren 4-7 zeigen bevorzugte Ausführungsformen von geschlossenen Sohlen. Die Verbindunge der jeweiligen Sohlen mit dem unlaufenden Laschenprofil ist dabei nicht dargestellt, sie kann jedoch grundsätzlich auf eine Art erfolgen, wie es in Figur 1d bzw. den Figuren 8b bis 8d gezeigt und in entsprechenden Textteilen beschrieben ist. Dabei soll an dieser Stelle erwähnt werden, dass abgesehen von der mechanischen Verbindung zwischen Sohle und umlaufendem Profillaschenband auch eine Verklebung möglich ist.

Die Sohle 3 weist einen Randbereich 21 auf, an welchem in der Regel die Befestigung am Randprofil des Hufschuhs erfolgt und dessen Oberfläche die Standfläche 34 für den Huf des Pferdes bildet. Dieser Randbereich soll etwa die gleiche Elastizität und Festigkeit wie bei bekannten offenen Sohlen aufweisen, doch kann eventuell die Elastizität etwas grösser und die Festigkeit etwas geringer sein, da bei der erfindungsgemässen Sohle das Mittelteil hinzukommt, welches die geschlossene Sohlenfläche ermöglicht und dabei, trotzt der erhöhten Elastizität, eine gewisse Festigkeitserhöhung in der Sohle bewirkt. Im dargestellten Beispiel von Figur 4 weist der mittlere Teil 22 der Sohle eine Ausnehmung auf, was zu der gewünschten erhöhtem Elastizität des Mittelteils führt. Dank dieser Elastizität kann der Huf trotz geschlossener Sohlenfläche die notwendigen Eigenbewegungen durchführen. Besteht die Sohle aus Polyurethan, so beträgt ihre Dicke im Randbereich vorzugsweise 9-14 mm und im Bereich der Ausnehmung 2-6 mm. Die Grösse der Ausnehmung wird dabei so gewählt, dass die Elastizität der Sohle, insbesondere bei seitlichen Belastungen, etwa derjenigen einer offenen Sohle entspricht, was z.B. durch eine einfache Messung festgestellt wird. Die Ausnehmung hat ferner den Vorteil, dass für den Strahl des Pferdehufschuhs genügend Raum vorhanden ist.

Wird die Sohle bestimmungsgemäss an einem Pferdehufschuh verwendet, so wird vorzugsweise der Hohlraum zwischen Sohle und Huf mit einem dauerelastischen Material wie z.B. Silikon, ausgeführt, um das Eindringen von Gegenständen, Schmutz oder Schnee in den Hohlraum von der Hinterseite des Hufes her zu vermeiden. Figur 5 zeigt eine mehrteilige Sohle 3, bei welcher der Randbereich 1 im wesentlichen hufeisenförmig ist. Dieser Randbereich dient wiederum zur Befestigung des Randprofils des Pferdehufschuhs und als Aufstandsfläche 34 für den Huf. An der Innenseite des hufeisenförmigen Randbereichs ist dabei eine Führung in Form einer Nut 24 vorgesehen, in welcher der mittlere Teil 22 ·der Sohle 3 einschiebbar ist. Dieser mittlere Teil ist z.B. in Form eines dünnen Bleches ausgeführt, kann also aus Metall bestehen. Die Befestigung in der Nut 4 kann z.B. durch Klebung erfolgen. Auch bei dieser Ausführung kann der Hohlraum zwischen Sohle und Huf vergossen werden. Wird das Mittelstück 22 leicht entfernbar in der Nut 4 gehalten, so kann auf das Ausfüllen des Hohlraums verzichtet werden, da dieser zur Reinigung leicht zugänglich ist. Zur Verstärkung der Sohle kann diese einen Steg 5 aufweisen, welcher gestrichelt dargestellt ist. Dieser Steg kann auch unterhalb der Nut 24 vorgesehen werden oder beidseitig der Nut. Der Steg 5 wurde hier gerade eingezeichnet, da er damit der oben erwähnten metallischen Ausführungsform des nichtelastischen Mittelteils 22 angepasst ist. Es wird aber hervorgehoben, dass natürlich eine geschwungene Stegform dann infrage kommt, wenn der Mittelteil 22 z.B. aus Kunststoff ausgebildet ist, so dass die Elastizität des Schuhs im wesentlichen dieselbe bleibt, ob im Falle der lösbaren Verbindung des Mittelteils 22 dieser Mittelteil 22 in der Sohle 3 eingeschoben ist oder nicht.

Die erwähnte Vergussmasse auf Silikonbasis ist vorzugsweise antiseptisch und luftdurchlässig, d.h. mit entsprechenden medizinisch wirksamen Zusätzen versehen. Solche Zusätze sind handelsüblich, dem Pferdehalter bekannt und sollen Keim-oder Pilzbefall an der Unterseite verhindern oder bekämpfen.

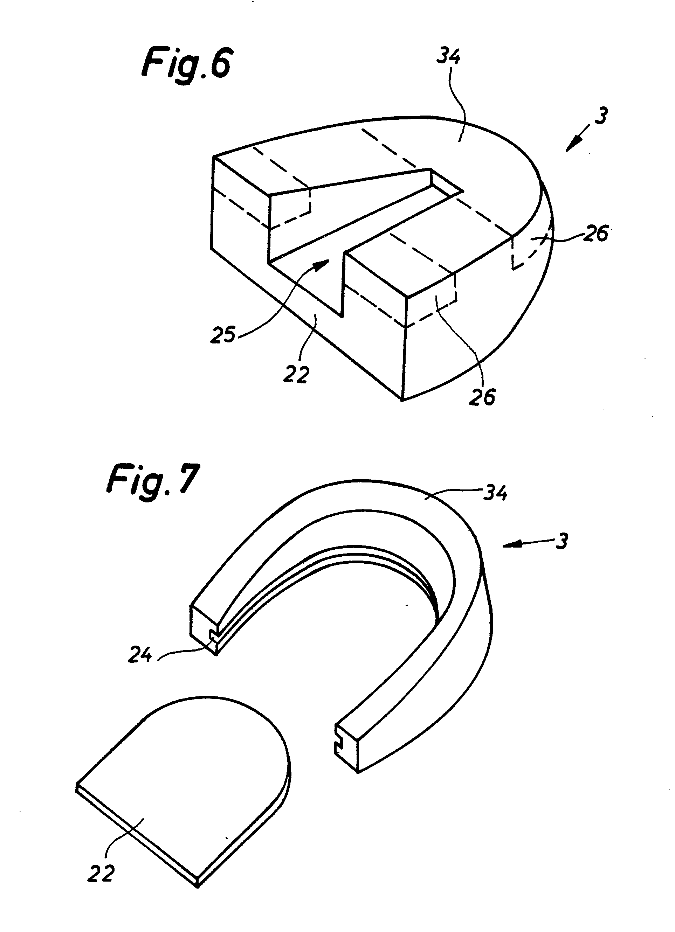

Die Figuren 6 und 7 zeigen im wesentlichen die Sohlen der Figuren 4 und 5, wobei jedoch deren Dicke nicht konstant gehalten ist. Diese Sohlen werden Keilsohlen genannt und dienen der statischen, anatomischen Korrektur. Wenn das Pferd auf seinem Huf steht, wird dieser Huf in eine zur Horizontalen Schräglage gezwungen und die entsprechenden Sehnen vermehrt gestreckt. In Figur 6 sind Ausnehmungen 26 gestrichelt angedeutet. Solche Ausnehmungen können wahlweise dort vorgesehen werden, wo die Hufunterseite die Standfläche 34 nicht berühren soll. Dies kann aus verschiedenen Motiven gegeben sein, z.B. aufgrund von Verletzungen der Hufunterseite. Damit ist die obere Seite der Sohle stufenförmig ausgebildet, es liegt eine Stufensohle vor. Auch bei der in der Figur 7 dargestellten Keilsohle könnten natürlich Ausnehmungen 26 vorgesehen sein. Der Vergleich zwischen den Figuren 6 und 7 zeigt, dass die dickste Stelle der Sohle vorne oder hinten sein kann; der Ort der dicksten Stelle hängt von der gewünschten anatomischen Korrektur des Hufes ab.

Eine besondere Ausführungsform der Stufensohle (bei offener Sohle) besteht darin, dass der Quersteg 5 eine derartige Dicke besitzt, dass der Strahl des Hufs die Hauptbelastung aufnimmt. Dadurch werden die normalerweise tragenden Hufteile entlastet. Natürlich muss dann der Steg 5 der Innenkontur des Hufs angepasst sein, um lokale überhohe Pressungen zu vermeiden. Solch ein Schuh mit vergrössertem Steg eignet sich vor allem für verletzte Hufe.

Figur 8a zeigt den erfindungsgemässen Vollkunst stoffhufschuh 2, dessen Lauffläche 35 aus aus Kunststoff bestehenden Trittelementen 9 gebildet ist, welche mittels einem am Schuhumfang umlaufenden Kunststoffprofil 8 mit den Laschen einstückig verbunden sind. Ein Quersteg 5 besitzt eine zweifache Abkröpfung, um, entsprechend den eingezeichneten Doppelpfeilen, durch seine Biegeelastizität die Hufeigenbewegungen zuzulassen. Dieser Schuh ist mit einer Nase 15 versehen, welche erlaubt, die Abrollachse vom vorderen Ende des umlaufenden Kunststoffprofils in den vorderen Bereich der Nase zu verlegen. Weiter dargestellt sind Markierungen 48 für geeignete Kürzung der Nase, um je nach individuellem Huf eine Ueberkorrektur zu vermeiden.

Auch dieser Schuh wird, wie der Pferdehufschuh 1, wie folgt dem Pferd angepasst: Entsprechend dem Umriss des Hufs wird eine bestimmte Sohle gewählt oder aus einer Kunststoffplatte ausgeschnitten; in diesem Moment kann auch die gewünschte Stegform ausgewählt werden. Danach wird ein die Laschen tragendes Kunststoffprofil ausgewählt. Je nachdem ob die Sohle als Keilsohle ausgebildet ist oder nicht, kommt ein Laschenprofil mit einer Nase 15 infrage. Das Laschenprofil wird dann um die Sohle herumgebogen und mit Hilfe z.B. der in den Figuren 8b bis 8d dargestellten Verbindungselementen verbunden. Das Laschenprofil wird in der Regel als ungebogenes, gerades Profilelement vorliegen. Je nach Biegeelastizität des gewählten Kunststoffs müssen deshalb die Lücken zwischen den Trittelementen 9 tiefer oder weniger tief ausgebildet werden. Ebenfalls ist darauf zu achten, dass die Lücken breit genug sind, um die Krümmung des Profils um die Sohle 3 zu ermöglichen. Ein Pferdehufschuh dieser Art eignet sich vorzüglich für Fohlen, da er sehr leicht ist.

Die Figuren 8b bis 8d zeigen bevorzugte Verbindungsformen zwischen umlaufendem Laschenprofil 8 und Sohle 3. Dabei ist jeweils ein Querschnitt entlang der Schnittlinie II-II von Figur 1b dargestellt.

Figur 8b zeigt, wie eine dünne, aus Kunststoff bestehende Sohle 3 auf einem Kunststofftrittelement 9 aufliegt. Ein Verbindungselement 27 besitzt einen verbreiterten Kopf und ist mit diesem im Trittelement eingegossen und ragt mit seinem Fuss aus diesem nach oben heraus. Dies bedeutet, dass nach Auswahl oder Fertigstellung der Sohle das Kunststoffprofil um diese herumgebogen werden kann und an der Sohle die Orte, wo die Verbindungselemente aus dem Trittelement hervorstehen, markiert werden. Danach können in die Sohle die entsprechenden Löcher gebohrt und die Sohle in das gebogene Laschenprofil 8 eingesetzt werden. Damit die Sohle sicher verankert wird, erfolgt vorzugsweise durch einen Körnerschlag eine Aufpilzung des oberen Endes des Verbindungselementes 27. Dadurch entsteht eine nietartige Verbindung zwischen Trittelement 9 und Sohle 3. Die Verbreiterung des oberen Endes der Verbindungselementes 27 hat eine gewisse Störung 33 der Sohlenoberfläche zur Folge; diese ist jedoch absolut unwesentlich und wird durch den Hufdruck nach sehr kurzer Benützungszeit eingeebnet.

Für gewisse Ausführungsformen könnte es empfehlenswert sein, die Trittelemente 9 mit einer metallischen Trittfläche zu versehen. Solch eine Trittfläche 36 muss dann gegen oben im Trittelement verankert werden. In der Figur sind zwei Verankerungsfortsätze dargestellt, mit deren Hilfe das metallische Trittelement 36 fest im Kunststofftrittelement 9 verankert ist. Wichtig ist jeweils, dass sich der Kopf des Verbindungselements 27 und die Verankerungsfortsätze für das metallische Trittelement 36 nicht zu nahe kommen, da keine durchgehende Verbindung von der Standfläche 34 zu der Lauffläche 35 bestehen soll.

Diese Ausfuhrungsform der Verbindung zwischen Sohle und Trittelement besitzt den Vorteil, dass die Verbindungselemente 27 bereits während der Produktion des Laschenprofils 8 in dieses eingegossen werden können, und dass beim Zusammensetzen des Schuhs nur noch die notwendigen Löcher in die Sohle gebohrt werden müssen.

An dieser Stelle sei noch darauf hingewiesen, dass bei Verwendung eines Vollkunststoffschuhs notwendigerweise Kunststofftrittelemente mit einer gewissen Dicke vorgesehen werden müssen; dies hat zur Folge, dass dann die Sohle 3 nurmehr dünn ausgebildet werden sollte, da sonst der gesamte Schuh für einen einwandreien Gang des Pferdes zu hoch wird.

Figur 8c zeigt eine weitere Ausführungsform der Verbindung zwischen den Trittelementen 9 und der hier aus Metall ausgebildeten Sohle 3. Ein Verbindungselement 27 ist mit seinem verbreiterten Kopf in eine dafür vorgesehene Ausnehmung 28 eingelassen und ragt nach oben aus dem Kunststoffelement 9 heraus. Dieses herausragende Ende wird durch entsprechende Löcher in der Sohle 3 gesteckt und wiederum in der Art des Niets aufgespreitzt. Auch hier sind die entsprechenden Störungen 33 in der Sohlenoberfläche ohne Belang, da sie nur sehr geringfügig ausfallen. Mit Hilfe der Ausnehmung 28 kann der Kopf des Verbindungselementes 27 genügend tief in der Lauffläche 35 versenkt werden, dass keine direkte Verbindung zwischen der Standfläche 34 und letzteres besteht.

Figur 8d zeigt eine weitere Ausführungsform der Verbindung zwischen Sohle 3 und Trittelement 9. Diesmal ist das Verbindungselement 27 mit einem Kopf in einer in der Sohle 3 vorgesehenen Ausnehmung 29 versenkt und erstreckt sich nach unten durch das gesamte Trittelement hindurch. Wiederum ist das die Lauffläche 35 durchstossende Ende des Verbindungselements in der Art der Nietverbindung aufgeschlagen. Dadurch entsteht, wenn entsprechend vorgegangen wird, an der Lauffläche 35 ein Buckel in der Art der Buckel 11 des mit metallischen Trittelementen versehenen Schuhs 1. Dabei kann, wenn gewünscht, die Oberfläche des buckelartigen Kopfes 30 des Verbindungselementes 27 mit einer Wolframkarbidschicht 32 versehen werden. Zudem ist es möglich, in einer im buckelartigen Kopf vorgesehenen Oeffnung 31 Stifte einzulassen.

Obschon der oben beschriebene Pferdehufschuh grosse Festigkeit besitzt, wird er doch bei jedem Schritt einer gewissen Deformation unterworfen. Deshalb ist es wichtig, die Verbindung zwischen dem Metallprofil 6 und den Kunststoffteilen des restlichen Schuhs so gut als möglich auszugestalten. Diese Aufgabe wird gelöst, wenn das Metallprofil mit einer Oeffnung versehene Buckel 42 besitzt, welche mit dem angrenzenden angegossenen Kunststoff ineinandergreifen und die Verbindung mechanisch unterstützen.

## Ansprüche

1. Pferdehufschuh (1,2) mit Laschen (4) zum Verkleben an der Hufaussenseite, mit einer Standfläche (34) für die Hufunterseite und einer Lauffläche (35) an der Unterseite des Schuhs, wobei eine die Standfläche bildende und dem Umriss des Hufs entsprechende Sohle (3) vorgesehen ist, dadurch gekennzeichnet, dass die Laschen (4) aus nur Kunststoff bestehen und dass sie eine der Hufaussenseite entsprechende Neigung aufweisen.

2. Pferdehufschuh nach Anspruch 1, dadurch gekennzeichnet, dass dessen Lauffläche (35) durch Metallelemente (7) gebildet ist, welche einstückig mit einem am Schuhumfang umlaufenden Metallprofil (6) verbunden sind.

3. Pferdehufschuh nach Anspruch 2, dadurch gekennzeichnet, dass die Metallelemente (7) mit einer Oeffnung (12) versehene, nach unten vorstehende Buckel (11) aufweisen.

4. Pferdehufschuh nach Anspruch 3, dadurch gekennzeichnet, dass die Bereiche (32) der Buckel (11) mit abriebresistentem Hartmetall, insbesondere Wolframkarbid, beschichtet sind.

5. Pferdehufschuh nach einem der Ansprüche 3 oder 4, dadurch gekennzeichnet, dass zur Erhöhung der Griffigkeit des Schuhs (1,2) auf dem Untergrund je nach dessen Beschaffenheit wahlweise in einzelne Oeffnungen (1,2) Greifelemente - (16), insbesondere Stifte eingesetzt sind, welche mit ihrem einen Ende aus dem jeweiligen Buckel - (11) herausragen.

6. Pferdehufschuh nach einem der Ansprüche 2-5, dadurch gekennzeichnet, dass die feste Verbindung des Metallprofils (6) mit Kunststoffteilen des restlichen Schuhs durch ineinandergreifen von am Metallprofil (6) mit einer Oeffnung versehenen Buckel (42) und dem angrenzenden Kunststoff unterstützt ist.

7. Pferdehufschuh nach Anspruch 6, dadurch gekennzeichnet, dass die unterstützende Verbindungsstelle unterhalb dem Fuss einer Lasche angeordnet und kreisförmig ausgebildet ist, wobei der in den Kunststoff ragende Buckel (42) einen halbmondförmigen Umriss besitzt und die Restfläche der Verbindungsstelle als Oeffnung (47) im Profil - (6) ausgebildet ist.

8. Pferdehufschuh nach einem der Ansprüche 1-7, dadurch gekennzeichnet, dass die Sohle (3) mit den Metallelementen (7) durch von letzteren abstehenden Verbindungselementen (13) verbunden ist, wobei die Verbindungselemente (13) selbstschneidende Spitzen (40) aufweisen, derart, dass beim Einlegen der diesbezüglich nicht vorbearbeiteten Sohle (3) in den restlichen Schuh - (1,2) durch Eindringen der Spitzen (40) in die Sohle (3) eine feste Verbindung zwischen der Sohle und den Metallelementen (7) entsteht.

9. Pferdehufschuh mit Laschen zum Verkleben an der Hufaussenseite, mit einer Standfläche (34) für die Hufunterseite und einer Laufffläche (35) an der Unterseite des Schuhs, wobei eine die Standfläche bildende und dem Umriss des Hufs entsprechende Sohle (3) vorgesehen ist, dadurch gekennzeichnet, dass die Laufffläche (35) aus aus Kunststoff bestehenden Trittelementen (9) gebildet ist, welche mittels einem am Schuhumfang umlaufenden Kunststoffprofil (8) mit den Laschen (4) einstückig verbunden sind und dass die Sohle (3) mit Trittelementen (9) durch metallische Verbindungselemente (27) verbunden ist.

10. Pferdehufschuh nach einem der Ansprüche 1-9, dadurch gekennzeichnet, dass die Laschen (4) mindestens annähernd eine Neigung abhängig von der durchschnittlichen oder individuellen Neigung des Hufs, am Ort der jeweiligen Lasche aufweisen, im wesentlichen gegenüber der Vertikalen einen Winkel von etwa 0° bis 50° aufweisen.

11. Pferdehufschuh nach einem der Ansprüche 1-10, dadurch gekennzeichnet, dass benachbarte Laschen eine Neigungsdifferenz von etwa 5° aufweisen.

12. Pferdehufschuh nach einem der Ansprüche 1-11, dadurch gekennzeichnet, dass die Neigung der Laschen (4) justierbar ist.

13. Pferdehufschuh nach einem der Ansprüche 1-12, dadurch gekennzeichnet, dass die Klebefläche (18) der Laschen (4) eine der Hufaussenseite entsprechende Wölbung aufweisen.

14. Pferdehufschuh nach einem der Ansprüche 1-13, dadurch gekennzeichnet, dass die Laschen eine der Länge nach vom Fuss bis gegen die Laschenspitze verlaufende, insbesondere als an der Aussenseite (19) entlang verlaufende Nut (46) ausgebildete Schwächung aufweisen.

15. Pferdehufschuh nach einem der Ansprüche 1-14, dadurch gekennzeichnet, dass die Laschen - (4) eine Solltrennstelle (20) aufweisen.

16. Pferdehufschuh nach einem der Ansprüche 1-15, oder 8-13, dadurch gekennzeichnet, dass die Sohle (3) eine geschlossene Fläche bildet, wobei der mittlere Teil (22) der Sohlenfläche eine grössere Elastizität aufweist als der Randbereich.

17. Pferdehufschuh nach Anspruch 15, dadurch gekennzeichnet, dass der Hohlraum zwischen Huf und Sohle mit einem dauerelastischen Material, insbesondere Silikon mit wahlweise einem medizinischen Zusatz gegen Pilz-und Keimbildung und Heilung von Wunden.

18. Pferdehufschuh nach einem der Ansprüche 16 bis 17, dadurch gekennzeichnet, dass die Sohle (3) einstückig ausgebildet ist und der mittlere Teil eine Ausnehmung (25) aufweist.

19. Pferdehufschuh nach einem der Ansprüche 16 bis 18, dadurch gekennzeichnet, dass die Sohle (3) aus Polyurethan, insbesondere technisches Polyurethan, besteht.

20. Pferdehufschuh nach Anspruch 19, dadurch gekennzeichnet, dass die Sohlendiche 9-14 mm und die Restdicke im Bereich der Ausnehmung 2-6 beträgt.

21. Pferdehufschuh nach einem der Ansprüche 16 bis 17, dadurch gekennzeichnet, dass die Sohle (3) mehrstückig ausgebildet ist.

22. Pferdehufschuh nach Anspruch 21, dadurch gekennzeichnet, dass ein erster Sohlenteil im wesentlichen hufeisenförmig ausgebildet ist und an der inneren Seitenwand eine Führung (24) aufweist, in welcher ein zweiter Sohlenteil (22) von der Hinterseite des Hufs her einschiebbar ist, welcher die Sohlenfläche schliesst.

23. Pferdehufschuh nach einem der Ansprüche 1 bis 22, dadurch gekennzeichnet, dass an seinem vorderen Ende eine vorzugsweise aus Kunststoff bestehende Nase (15) mit vorzugsweise an deren Oberfläche angebrachten Markierungen (48) für Anpassung durch Kürzen der Nasenlänge an den individuellen Huf vorgesehen ist, derart, dass ein Abrollen des Schuhs nach vorne für Nachziehen des Beins vollständig oder mindestens annähernd um eine Achse verläuft, welche aus dem Schuh - (1,2) heraus zur Nasenspitze verlegt ist.

24. Pferdehufschuh nach einem der Ansprüche 1 bis 23, dadurch gekennzeichnet, dass die Sohle - (3) im Längsschnitt keilförmig mit der grössten Dicke beim vorderen oder hinteren Ende des Schuhs ausgebildet ist.

25. Pferdehufschuh nach einem der Ansprüche 1 bis 24, dadurch gekennzeichnet, dass in der Sohle (3) zur Standfläche gehörende erste Bereiche (26) ausgespart sind, derart, dass die Hufunterseite nur auf vorbestimmten, zweiten Bereichen getragen ist.

26. Pferdehufschuh nach einem der Ansprüche 1 bis 25, dadurch gekennzeichnet, dass der Steg zur Entlastung der normalerweise tragenden Hufteile derart verdichtet ist, dass der Strahl des Hufs die Hauptbelastung aufnimmt.

27. Pferdehufschuh nach einem der Ansprüche 1 bis 26, dadurch gekennzeichnet, dass die beiden hinteren Enden der Sohle (3) durch einen Steg (5) verbunden sind welche höchstens teilweise der kürzesten Verbindungslinie zwischen den Verbindungsstellen des Stegs mit der Sohle entlang verläuft.

28. Pferdehufschuh nach Anspruch 27, dadurch gekennzeichnet, dass der Steg (5) zwischen den Verbindungsstellen für verbesserte Spreizelastizität des Schuhs V-oder W-förmig geschwungen ausgebildet ist.

29. Pferdehufschuh nach einem der Ansprüche 9 bis 28, dadurch gekennzeichnet, dass die Dicke der Sohle (3) geringer ist als die Höhe der Trittelemente.

30. Pferdehufschuh nach einem der Ansprüche 9 bis 29, dadurch gekennzeichnet, dass die Sohle aus Metall, vorzugsweise Aluminium und/oder aus einem Kunststoffverbundwerkstoff besteht.

31. Pferdehufschuh nach einem der Ansprüche 9 bis 30, dadurch gekennzeichnet, dass die Sohle - (3) mit dem restlichen Schuh (2) mit Hilfe von in Trittelementen eingegossenen Verbindungselementen (27), vorzugsweise Nieten, verbunden ist.

32. Pferdehufschuh nach einem der Ansprüche 9 bis 31, dadurch gekennzeichnet, dass die Sohle - (3) mit dem restlichen Schuh (2) mit Hilfe von in Aussparungen (28) in den Trittelementen eingebrachten Verbindungselementen (27) verbunden ist, derart, dass letztere in den Trittelementen vollständig versenkt sind.

33. Pferdehufschuh nach einem der Ansprüche 9 bis 32, dadurch gekennzeichnet, dass die Verbindungselemente (27) mit Hilfe von Ausnehmungen (29) in der Sohle (3) versenkt sind, durch die Trittelemente (9) hindurchreichen und an deren unterer Seite zu einem buckelförmigen Kopf (30) aufgestaucht sind, wobei die buckelförmige Oberfläche des Kopf (3) wahlweise mit Hartmetall, insbesondere Wolframkarbid beschichtet ist und/oder eine Oeffnung aufweist, in welche wahlweise ein Hartmetallstift eingelassen ist.

34. Verfahren zur Herstellung des Buckels nach einem der Ansprüche 3-5, gekennzeichnet durch die folgen den Verfahrensschritte:

a) Anbringen einer Bohrung mit kleinem Durchmesser als derjenige der künftigen Oeffnung (11) in das künftige Metallprofil (6),

b) Einprägen des Buckels in das Profil (6) derart, dass die Bohrung sich am Ort der künftigen Oeffnung (11) befindet,

c) Aufbohren der durch die Einprägung verformten Bohrung zu der Oeffnung (11) derart, dass die vertikal verlaufenden Wände (50) der Oeffnung (11) die Buckelseiten (51) schräg schneiden, so dass die Höhe der Wände (50) grösser als die Dicke der Buckelseiten (51) ist.

35. Einzelne Lasche für einen Hufschuh nach einem der Ansprüche 1-8, gekennzeichnet durch eine der Höhe des Metallprofils (6) entsprechende Verlängerung, derart, dass die Lasche anstelle einer ausgerissenen Lasche in den Schuh (1) einsetzbar ist, wobei die Lasche unter anderem eines oder mehrerer Merkmale nach den Ansprüchen 10-15 aufweist.

0 233 335

**Fig. 1a**

**Fig. 1b**

**Fig.1c**

**Fig.1d**

Fig.2a

Fig.2b

Fig.2c

Fig. 3

# Fig.4

# Fig.5

*Fig.6*

34

3

25

22

26

26

*Fig.7*

34

3

24

22

*Fig.8a*

*Fig.8b*          *Fig.8c*          *Fig.8d*